# EUROPÄISCHE PATENTSCHRIFT

(11) **EP 2 626 728 B1**
(45) Veröffentlichungstag und Bekanntmachung des Hinweises auf die Patenterteilung: **16.03.2022**
(21) Anmeldenummer: 12198307.6
(22) Anmeldetag: 20.12.2012
(51) Int. Cl.: G01V 8/10, G02B 19/00

(54) **Sendeeinheit für einen optischen Sensor**
Transmission unit for an optical sensor
Unité d'émission pour un capteur optique

(30) Priorität: 31.01.2012 DE 102012100746
(43) Veröffentlichungstag der Anmeldung: 14.08.2013
(73) Patentinhaber: Leuze electronic GmbH + Co KG, 73277 Owen/Teck (DE)
(72) Erfinder: Droemer, Jörg, 72574 Bad Urach-Wittlingen (DE)
(74) Vertreter: Ruckh, Rainer Gerhard

(56) Entgegenhaltungen:
- WO-A2-2008/080165
- DE-A1- 10 229 408
- DE-A1-102006 003 257
- None

## Beschreibung

Die Erfindung betrifft einen optischen Sensor.

Derartige optischen Sensoren weisen generell neben einer Sendeeinheit, mittels derer Lichtstrahlen emittiert werden, auch eine zugeordnete Empfangseinheit auf, mittels derer die von der Sendeeinheit emittierten Lichtstrahlen empfangen werden. Derartig ausgebildete optische Sensoren können zur Erfassung von Objekten in einem Überwachungsbereich ausgebildet sein, wobei die optischen Sensoren insbesondere als Distanzsensoren ausgebildet sein können. Weiterhin können derartige optische Sensoren noch als Datenlichtschranken ausgebildet sein, bei welchen mit den von der Sendeeinheit zur Empfangseinheit gesendeten Lichtstrahlen auf optischem Weg Daten übertragen werden.

Bei optischen Sensoren, die über große Distanzen Objekte erfassen oder Daten übertragen, werden typischerweise Sendeeinheiten eingesetzt, die Laserlicht emittieren. Um beispielsweise über große Distanzen die Lichtstrahlen der Sendeeinheit einer Datenlichtschranke zu der zugeordneten Empfangseinheit zu senden, ist eine große Lichtintensität erforderlich, damit an der Empfangseinheit noch eine hinreichende, für die Auswertung erforderliche Lichtmenge ankommt. Die Lichtintensität der Lichtstrahlen kann jedoch aus Gründen der Anforderung für die Augensicherheit des optischen Sensors nicht beliebig hoch gewählt werden, da die normativen Anforderungen der Norm IEC 60825-1 fordern, dass außerhalb der Sendeeinheit die Bestrahlungsstärke einen bestimmten Grenzwert nicht überschreiten darf.

Diese Anforderung schränkt die Auslegung der einzelnen Komponenten der Sendeeinheit oft erheblich ein, was im Folgenden anhand des Beispiels eines als Datenlichtschranke ausgebildeten optischen Sensors erläutert werden soll.

Die Sendeeinheit einer bekannten Datenlichtschranke oder allgemein eines optischen Sensors besteht in der Regel aus einer Lichtstrahlen emittierenden Senderlichtquelle, wie zum Beispiel einer Laserdiode, sowie einer Sendeoptik in Form einer Sendelinse.

Der Öffnungswinkel des mit der Sendeoptik generierten Lichtbündels der Lichtstrahlen darf einerseits nicht zu groß sein, damit eine hinreichende Lichtmenge auf die Empfangseinheit trifft. Andererseits darf der Öffnungswinkel auch einen Mindestwert nicht unterschreiten, damit die Sendeeinheit auf die Empfangseinheit innerhalb einer vertretbaren Ausrichtetoleranz ausgerichtet werden kann. Wäre der Öffnungswinkel zu gering, wäre die Ausrichttoleranz auf ein nicht praktikables Maß eingeengt, so dass eine Ausrichtung der Sendeeinheit relativ zur Empfangseinheit erheblich erschwert würde.

Durch diese Anforderungen an den Öffnungswinkel ergibt sich bei gegebener Größe der Senderlichtquelle eine bestimmte Brennweite oder ein eingeschränkter Brennweitenbereich, das heißt einen Abstand zwischen Senderlichtquelle und Sendelinse, wodurch die maximale Intensität beziehungsweise Leistung der Senderlichtquelle begrenzt ist.

Da bei Sendeoptiken in Form einer Sendelinse eine gaußförmige oder lambertsche räumliche Intensitätsverteilung der Lichtstrahlen erhalten wird, ist die Bestrahlungsstärke in der Mitte des Lichtstrahlbündels größer als im Randbereich. Dies kann dazu führen, dass im Zentrum des Lichtstrahlenbündels der für die Augensicherheit zulässige Maximalwert der Bestrahlungsstärke überschritten wird, beziehungsweise dass in den Randbereichen die Bestrahlungsstärke zu niedrig ist, um in der Empfangseinheit ausgewertet werden zu können, was bei einer bereits geringen Verkippung der Sendeeinheit zur Empfangseinheit dazu führen kann, dass die Datenübertagung zwischen diesen Einheiten unterbrochen ist.

Ein weiterer Nachteil dieser Anordnung besteht darin, dass die Bestrahlungsstärke der Lichtstrahlen im Fernfeld der Sendeoptik eine Abbildung der Oberfläche der Senderlichtquelle darstellt. Die Senderlichtquelle weist generell eine gewisse Ausdehnung auf, wobei in der Mitte der Senderlichtquelle typisch ein Bonddraht vorgesehen ist, der eine lokale dunkle Stelle bildet. Bei der Abbildung der Senderlichtquelle im Formfeld der Sendeoptik entsteht entsprechend im Zentrum des Lichtflecks eine dunkle Stelle, das heißt trifft das Lichtbündel der Lichtstrahlen mit dieser dunklen Stelle auf die Empfangseinheit, wird dort keine für eine Auswertung der optischen Daten ausreichende Lichtmenge mehr empfangen.

Die DE 10 2006 003 257 A1 betrifft eine Vorrichtung zur Erfassung von Passermarken mit einer Kamera zum Aufnehmen eines Positionierfeldes, in dem die Passermarken angeordnet sind, und einer Beleuchtungseinrichtung zum Beleuchten des Positionierfeldes. Die Beleuchtungseinrichtung weist LED-Chips auf. Die Kamera und die LED-Chips sind auf einer gemeinsamen Leiterplatte angeordnet.

Die LED-Chips sind in einem von einer Kunststoffplatte gebildeten Lichtintegrator angeordnet. Im Lichtintegrator wird eine diffuse Lambertstrahlung erzeugt, die über eine dünne weiße Membran abgestrahlt und asphärischen Linsen zugeführt wird.

Der Erfindung liegt die Aufgabe zugrunde, einen optischen Sensor mit verbesserter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor. Die Sendeeinheit für diesen optischen Sensor umfasst eine Lichtstrahlen emittierende Senderlichtquelle und eine der Senderlichtquelle nachgeordnete Strahlformungsoptik. Mittels der Strahlformungsoptik wird in einer Zwischenbildebene eine homogene Lichtverteilung mit einem Durchmesser erzeugt. Weiterhin umfasst die erfindungsgemäße Sendeeinheit eine in der Zwischenbildebene angeordnete Streuscheibe, welche die Lichtstrahlen auf eine nachgeordnete Sendelinse als weiteren Bestandteil der Sendeeinheit verteilt. Im Zentrum der Sendelichtquelle ist ein Bonddraht vorgesehen. Alternativ bestehen die Senderlichtquelle aus einem Laserlicht emittierenden VCSEL (vertical cavity surface emitting laser). Die Streuscheibe ist ein binäres oder mehrstufiges diffraktives optisches Element. Die Sendelinse ist eine Fresnellinse. Das diffraktive optische Element weist einzelne Flächenabschnitte auf, die jeweils die Lichtstrahlen in denselben Richtungen führen und somit gleiche Intensitätsverteilungen erzeugen. Die das diffraktive optische Element passierenden Lichtstrahlen leuchten die Fresnellinse homogen aus.

Ein wesentlicher Aspekt der Erfindung besteht darin, dass mit der Strahlformungsoptik die von der Senderlichtquelle emittierten Lichtstrahlen auf die Streuscheibe in der Zwischenbildebene verteilt und nicht abgebildet werden, so dass dort innerhalb eines durch die spezifische Ausbildung der Strahlformungsoptik vorgegebenen, gewünschten Durchmessers eine homogene Lichtverteilung erzeugt wird.

Besonders vorteilhaft ist die mit der Strahlformungsoptik erzeugte Lichtverteilung der Lichtstrahlen in der Zwischenbildebene stufenförmig ausgebildet, das heißt die Lichtverteilung weist innerhalb des Durchmessers eine im Wesentlichen konstante Lichtintensität auf und fällt dann nicht kontinuierlich sondern abrupt auf einen Wert von nahezu null ab.

Eine derartige Lichtverteilung lässt sich besonders gut und reproduzierbar vorgeben, wenn die Strahlformungsoptik eine Freiformfläche aufweist, die bevorzugt die Eintrittsfläche der Strahlformungsoptik für die auftreffenden Lichtstrahlen der Senderlichtquelle bildet. Durch eine definierte Ausbildung der Form der Freiformfläche kann die gewünschte Lichtverteilung in der Zwischenbildebene exakt vorgegeben werden.

Die Streuscheibe in der Zwischenbildebene, die erfindungsgemäß von einem diffraktiven optischen Element gebildet ist, verteilt das Licht auf die Sendelinse, die dann die Lichtstrahlen aus der Sendeeinheit führt. Die Streuscheibe bildet damit eine scheinbare Lichtquelle für die Sendelinse. Da durch die Strahlformungsoptik innerhalb des Durchmessers eine konstante Lichtverteilung erhalten wird und durch die Streuscheibe diese Homogenität beibehalten wird. Das Zusammenwirken der Streuscheibe und der Freiformfläche ist dabei derart, dass im Nahbereich, das heißt bei kleinen Objektabständen zum optischen Sensor durch die Streuscheibe eine stufenförmige Lichtverteilung generiert wird, die hinsichtlich der Einhaltung der Anforderungen bezüglich der Augensicherheit Vorteile hat. Im Fernbereich wird dagegen die stufenförmige Lichtverteilung durch die spezifische Ausbildung der Freiformfläche erhalten.

Damit wird als wesentlicher Vorteil erhalten, dass Abbildungen der Struktur der Senderlichtquelle, insbesondere durch Bonddrähte im Zentrum der Senderlichtquelle bedingte dunkle Stellen im Zentrum der Lichtverteilung, vermieden werden, das heißt durch derartige dunkle Stellen bedingte Funktionsbeeinträchtigungen des optischen Sensors werden mit der erfindungsgemäßen Sendeeinheit vermieden. Weiterhin ist vorteilhaft, dass im Gegensatz zu der aus dem Stand der Technik bekannten Sendeeinheit, die gaußförmige oder lambertsche Intensitätsverteilungen der Lichtstrahlen generieren, unterwünschte Maxima der Lichtverteilungen, bei welchen die Bedingungen der Augensicherheit verletzt sind, oder geringe Intensitätswerte an den Randbereichen der Lichtverteilungen, für welche in der angeordneten Empfangseinheit eine für die Funktion des optischen Sensors nicht mehr ausreichende Lichtmenge erhalten wird, vermieden werden.

Ein weiterer wesentlicher Vorteil der erfindungsgemäßen Sendeeinheit besteht darin, dass diese Sendeeinheit im Vergleich zu bekannten Sendeeinheiten, die nur mit einer Sendelinse als der Senderlichtquelle nachgeordnete Sendeoptik arbeiten, mehr Lichtleistung augensicher emittieren kann. Dies beruht darauf, dass der Durchmesser der Lichtverteilung in der Zwischenbildebene, die der Größe der scheinbaren Senderlichtquelle der Sendeeinheit entspricht, über die Strahlformungsoptik flexibel vorgegeben werden kann und insbesondere an einen applikationsspezifisch vorgegebenen Öffhungswinkel der Sendeeinheit, innerhalb dessen Lichtstrahlen emittiert werden, angepasst werden kann. Damit aber kann die Brennweite der Sendeeinheit bei vorgegebenem Öffnungswinkel über das bestehende Maß, das bei den Sendeeinheiten aus dem Stand der Technik gegeben ist, vergrößert werden, wodurch die Lichtleistung bei Einhaltung der Bedingungen für die Augensicherheit erhöht werden kann. Damit wird mit der erfindungsgemäßen Sendeeinheit eine höhere Reichweite bei Einhaltung der Anforderungen an die Augensicherheit erzielt, das heißt es können mit optischen Sensoren Objekte ein größeren Distanzen erkannt werden, beziehungsweise in nach dem Lichtschrankenprinzip arbeitenden optischen Sensoren können größere Abstände zwischen Sendeeinheit und Empfangseinheit realisiert werden.

Die erfindungsgemäße Sendeeinheit kann in optischen Sensoren unterschiedlicher Ausprägungen eingesetzt werden. Beispielsweise können derartige optische Sensoren von Lichttastern, Distanzsensoren oder Datenlichtschranken gebildet sein.

Die Erfindung wird im Folgenden anhand der Zeichnungen erläutert. Es zeigen:
- Figur 1:: Ausführungsform der erfindungsgemäßen Sendeeinheit für einen optischen Sensor.
- Figur 2:: Intensitätsverteilungen in einer Targetebene, erzeugt mit einer erfindungsgemäßen Sendeeinheit und einer Sendeeinheit gemäß dem Stand der Technik.

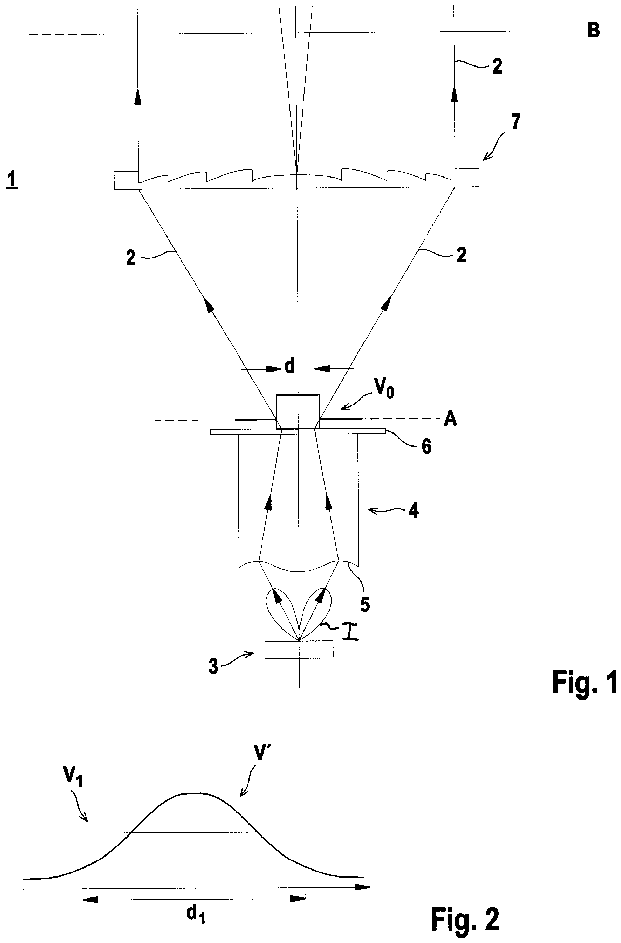

Figur 1 zeigt ein Ausführungsbeispiel einer Sendeeinheit 1 für einen optischen Sensor. Die Sendeeinheit 1 weist eine Lichtstrahlen 2 emittierende Senderlichtquelle 3 auf. Prinzipiell kann die Senderlichtquelle 3 von einer Leuchtdiode oder einer Laserdiode gebildet sein. Im vorliegenden Fall besteht die Senderlichtquelle 3 aus einem Laserlicht emittierenden VCSEL (vertical cavity surface emitting laser). Wie aus Figur 1 ersichtlich, weist die Intensitätsverteilung I der von der Senderlichtquelle 3 emittierten Lichtstrahlen 2 in der Mitte ein Minimum und seitlich zwei Maxima auf.

Der Senderlichquelle 3 ist eine Strahlformungsoptik 4 nachgeordnet, deren Eintrittsfläche für die Lichtstrahlen 2 in Form einer Freiformfläche 5 ausgebildet ist.

Mit der Freiformfläche 5 der Strahlformungsoptik 4 wird eine Verteilung, keine Abbildung der Lichtstrahlen 2 derart erzeugt, dass in einer Zwischenbildebene A eine innerhalb eines Durchmessers d konstante Verteilung Vₒ der Lichtintensität generiert wird, die innerhalb des Durchmessers eine konstante Lichtintensität aufweist und dann abrupt, das heißt stufenförmig auf einen Wert null oder nahe null abfällt.

Vorteilhaft ist die Freiformfläche 5 so dimensioniert, dass die Lichtstrahlen 2 zumindest näherungsweise parallel zur Zwischenbildebene A geführt werden. Hierzu ist der Abstand der Senderlichtquelle 3 zur Freiformfläche 5 erheblich kleiner als der Abstand zwischen der Freiformfläche 5 und der Zwischenbildebene A.

In der Zwischenbildebene A befindet sich eine Streuscheibe. Diese Streuscheibe ist von einem binären oder mehrstufigen diffraktivem optischen Element 6 gebildet. Das diffraktive optische Element 6 weist einzelne Flächenabschnitte auf, die jeweils die Lichtstrahlen 2 in dieselben Richtungen führen und somit gleiche Intensitätsverteilungen erzeugen. Die das diffraktive optische Element 6 passierenden Lichtstrahlen 2 sind auf eine Sendelinse in Form einer Fresnellinse 7 geführt. Die Lichtstrahlen 2 leuchten die Fresnellinse 7 homogen aus.

Mit der so ausgebildeten Sendeeinheit 1 wird in einer Targetebene B eine im Wesentlichen stufenförmige räumliche Verteilung V₁ der Lichtintensität wie in Figur 2 dargestellt erhalten, das heißt die stufenförmige Form der mit der Strahlformungsoptik 4 in der Zwischenbildebene A generierten Verteilung V₁ wird beibehalten.

Durch die Freiformfläche 5 der Strahlformungsoptik 4 und das diffraktive optische Element 6 weist die Verteilung V₁ über ihren gesamten Durchmesser d₁ eine konstante Lichtintensität auf. Dies bedeutet, dass die inhomogene Struktur der Intensitätsverteilung I in der Verteilung V₁ nicht mehr erkennbar ist.

Die gleichförmige Verteilung V₁ der Lichtstrahlen 2, die mit der erfindungsgemäßen Sendeeinheit 1 generiert wird, unterscheidet sich auch von einer in Figur 2 weiterhin dargestellten gaußförmigen Lichtverteilung V', die mit einer aus dem Stand der Technik bekannten Sendeeinheit 1 generiert wird.

Die homogene Verteilung V₁, die mit der erfindungsgemäßen Sendeeinheit 1 generiert wird, weist gegenüber der Verteilung V' mehrere Vorteile auf. Wie aus Figur 2 ersichtlich, ist die Lichtintensität der Verteilung V' im Zentrum höher als die Intensität der Verteilung V₁, in den Randbereichen ist sie jedoch bedeutend kleiner.

Die erfindungsgemäße Verteilung V₁ kann durch die Ausgestaltung der Sendeeinheit 1 so ausgelegt werden, dass eine konstante Lichtintensität erhalten wird, für die die Bedingungen der Augensicherheit auch erfüllt sind. Im Vergleich hierzu ist die Verteilung V' im Zentrum erhöht gegenüber der Verteilung V₁, so dass dort die Bedingungen für die Augensicherheit nicht mehr erfüllt sind. Gleichzeitig fällt die Lichtintensität in den Randbereichen der Verteilung V₁ stark ab, so dass mit einem eine derartige Sendeeinheit 1 aufweisenden optischen Sensor für diese Randbereiche gegebenenfalls keine sichere Objektdetektion mehr möglich ist oder bei einem optischen Sensor in Form einer Datenlichtschranke, die Lichtintensität nicht mehr für eine fehlerfreie Auswertung der Lichtsignale der Sendeeinheit 1 ausreicht. Somit ist die mit der erfindungsgemäßen Sendeeinheit 1 generierte räumliche Verteilung V₁ dahingehend optimiert, dass unter Beachtung der Anforderungen für die Augensicherheit die Lichtintensität der Lichtstrahlen 2 gegenüber der aus dem Stand der Technik bekannten Sendeeinheit 1 erhöht werden kann. Zudem kann der gesamte Lichtfleck für eine Objektdetektion oder optische Datenübertragung genutzt werden, da die Lichtintensität über den gesamten Durchmesser d konstant ist und keine lokalen Einbrüche aufweist.

Schließlich kann mit der erfindungsgemäßen Sendeeinheit 1 auch deshalb eine gegenüber bekannten Sendeeinheiten 1 erhöhte Lichtleistung bei gleichzeitiger Einhaltung der Anforderungen für die Augensicherheit der Sendeeinheit 1 erzielt werden, weil mittels der Strahlformungsoptik 4 eine scheinbare Senderlichtquelle 3 in die Zwischenbildebene A abgebildet wird. Der Durchmesser d der scheinbaren Senderlichtquelle 3, das heißt der Durchmesser d der Verteilung Vₒ der Lichtintensität in der Zwischenbildebene A, ist nicht mehr unveränderlich vorgegeben, sondern kann durch die Ausbildung der Strahlformungsoptik 4 vorgegeben und variiert werden. Damit aber kann für einen applikationsspezifisch vorgegebenen Öffnungswinkel der Lichtstrahlen 2 der Durchmesser d der Verteilung Vₒ so dimensioniert werden, dass eine erhöhte Sendeleistung augensicher emittiert wird.

### Bezugszeichenliste

- (1): Sendeeinheit
- (2): Lichtstrahlen
- (3): Senderlichtquelle
- (4): Strahlformungsoptik
- (5): Freiformfläche
- (6): diffraktives optisches Element
- (7): Fresnellinse
- (A): Zwischenbildebene
- (B): Targetebene
- (d): Durchmesser
- (Vₒ): Verteilung
- (V₁): Verteilung
- (V'): Verteilung

## Patentansprüche

1. Optischer Sensor mit einer Sendeeinheit (1), welche eine Lichtstrahlen (2) emittierende Senderlichtquelle (3) und eine der Senderlichtquelle (3) nachgeordnete Strahlformungsoptik (4), mittels derer in einer Zwischenbildebene (A) eine homogene Lichtverteilung mit einem Durchmesser erzeugt wird aufweist, wobei in der Zwischenbildebene (A) eine Streuscheibe angeordnet ist, welche die Lichtstrahlen (2) auf eine nachgeordnete Sendelinse als weiterem Bestandteil der Sendeeinheit (1) verteilt, **dadurch gekennzeichnet, dass** im Zentrum der Senderlichtquelle (3) ein Bonddraht vorhanden ist oder die Senderlichtquelle (3) aus einem Laserlicht emittierenden VCSEL, vertical cavity surface emitting laser, besteht, dass die Streuscheibe ein binäres oder mehrstufiges diffraktives optisches Element (6) ist, und dass die Sendelinse eine Fresnellinse (7) ist, wobei das diffraktive optische Element (6) einzelne Flächenabschnitte aufweist, die so ausgebildet sind, dass die das diffraktive optische Element (6) passierenden Lichtstrahlen (2) die Fresnellinse (7) homogen ausleuchten.

2. Optischer Sensor nach Anspruch 1, **dadurch gekennzeichnet, dass** die Strahlformungsoptik (4) als strahlformendes Element eine Freiformfläche (5) aufweist.

3. Optischer Sensor nach Anspruch 2, **dadurch gekennzeichnet, dass** die Freiformfläche (5) die Eintrittsfläche der Strahlformungsoptik (4) bildet.

4. Optischer Sensor nach einem der Ansprüche 1 bis 3, **dadurch gekennzeichnet, dass** die mit der Strahlformungsoptik (4) erzeugte Lichtverteilung der Lichtstrahlen (2) in der Zwischenbildebene (A) stufenförmig ausgebildet ist.

5. Optischer Sensor nach einem der Ansprüche 1 bis 4, **dadurch gekennzeichnet, dass** die Lichtintensität der Lichtverteilung der Lichtstrahlen (2) in der Zwischenbildebene (A) innerhalb des Durchmessers einen konstanten Wert annimmt und dann abrupt auf einen Wert null oder nahezu null abfällt.

6. Optischer Sensor nach einem der Ansprüche 1 bis 5, **dadurch gekennzeichnet, dass** der Abstand der Senderlichtquelle (3) zur Eintrittsfläche der Strahlformungsoptik (4) klein ist im Verhältnis zum Abstand zwischen der Eintrittsfläche der Strahlformungsoptik (4) und der Zwischenbildebene (A).

## Claims

1. An optical sensor having a transmission unit (1) which has a transmission light source (3) emitting light beams (2) and beam-shaping optics (4) which are arranged downstream of the transmission light source (3) and by means of which a homogeneous light distribution with a diameter is produced in an intermediate image plane (A), a diffusing disc being arranged in the intermediate image plane (A) and distributing the light beams (2) to a downstream transmission lens as a further component of the transmission unit (1), **characterised in that** a bonding wire is present in the centre of the transmission light source (3) or the transmission light source (3) consists of a laser light-emitting, VCSEL, vertical cavity surface-emitting laser, **in that** the diffusing lens is a binary or multistage diffractive optical element (6) and **in that** the transmitting lens is a Fresnel lens (7), the diffractive optical element (6) having individual surface sections which are designed in such a way that the light beams (2) passing through the diffractive optical element (6) homogeneously illuminate the Fresnel lens (7).

2. An optical sensor according to claim 1, **characterised in that** the beam-shaping optics (4) has a free-form surface (5) as a beam-shaping element.

3. An optical sensor according to claim 2, **characterised in that** the free-form surface (5) forms the entrance surface of the beam-shaping optics (4).

4. An optical sensor according to one of claims 1 to 3, **characterised in that** the light distribution of the light beams (2) in the intermediate image plane (A) generated with the beam shaping optics (4) is step-shaped.

5. An optical sensor according to any one of claims 1 to 4, **characterised in that** the light intensity of the light distribution of the light beams (2) in the intermediate image plane (A) assumes a constant value within the diameter and then abruptly drops to a value of zero or almost zero.

6. An optical sensor according to any one of claims 1 to 5, **characterised in that** the distance of the transmission light source (3) to the entrance surface of the beam shaping optics (4) is small in relation to the distance between the entrance surface of the beam shaping optics (4) and the intermediate image plane (A).

## Revendications

1. Capteur optique avec une unité de transmission (1) qui présente une source de lumière de transmission (3) émettant des rayons lumineux (2) et une optique de mise en forme des rayons (4) disposée en aval de la source de lumière de transmission (3), grâce à laquelle une répartition homogène de la lumière avec un diamètre est produite dans un plan d'image intermédiaire (A), un disque de diffusion étant disposé dans le plan d'image intermédiaire (A) et répartissant les rayons lumineux (2) vers une lentille de transmission en aval en tant qu'autre composant de l'unité de transmission (1), **caractérisé en ce qu'**un fil de liaison est présent au centre de la source de lumière de transmission (3) ou la source de lumière de transmission (3) consiste en un laser à émission de lumière, VCSEL, laser à émission de surface à cavité verticale, **en ce que** la lentille de diffusion est un élément optique diffractif binaire ou à plusieurs étages (6) et **en ce que** la lentille de transmission est une lentille de Fresnel (7), l'élément optique diffractif (6) présente des sections de surface individuelles qui sont conçues de telle sorte que les rayons lumineux (2) traversant l'élément optique diffractif (6) éclairent de manière homogène la lentille de Fresnel (7).

2. Capteur optique selon la revendication 1, **caractérisé en ce que** l'optique de mise en forme du faisceau (4) a une surface de forme libre (5) comme élément de mise en forme du faisceau.

3. Capteur optique selon la revendication 2, **caractérisé en ce que** la surface de forme libre (5) forme la surface d'entrée de l'optique de mise en forme de faisceau (4).

4. Capteur optique selon l'une des revendications 1 à 3, **caractérisé en ce que** la distribution lumineuse des faisceaux lumineux (2) dans le plan d'image intermédiaire (A) généré avec l'optique de mise en forme de faisceau (4) est en forme d'escalier.

5. Capteur optique selon l'une quelconque des revendications 1 à 4, **caractérisé en ce que** l'intensité lumineuse de la répartition lumineuse des faisceaux lumineux (2) dans le plan d'image intermédiaire (A) prend une valeur constante à l'intérieur du diamètre, puis chute brusquement à une valeur nulle ou presque nulle.

6. Capteur optique selon l'une quelconque des revendications 1 à 5, **caractérisé en ce que** la distance entre la source de lumière de transmission (3) et la surface d'entrée de l'optique de mise en forme du faisceau (4) est faible par rapport à la distance entre la surface d'entrée de l'optique de mise en forme du faisceau (4) et le plan image intermédiaire (A).
